# EUROPÄISCHE PATENTSCHRIFT

(11) **EP 0 736 406 B1**
(45) Veröffentlichungstag und Bekanntmachung des Hinweises auf die Patenterteilung: **31.05.2000**
(21) Anmeldenummer: 96102409.8
(22) Anmeldetag: 17.02.1996
(51) Int. Cl.: B60K 15/04, B60K 15/05

(54) **Muldenkörper**
Trough body
Corps d'auge

(30) Priorität: 05.04.1995 DE 19512742
(43) Veröffentlichungstag der Anmeldung: 09.10.1996
(73) Patentinhaber: Volkswagen Aktiengesellschaft, 38436 Wolfsburg (DE)
(72) Erfinder: Nguyen, Ngdoc D., D-38444 Wolfsburg (DE)

(56) Entgegenhaltungen:
- EP-A- 0 545 813
- DE-A- 3 301 072
- FR-A- 2 009 928
- US-A- 5 118 155

## Beschreibung

Die Erfindung betrifft einen Muldenkörper gemäß dem Oberbegriff des Patentanspruchs 1, und ein Verfahren zur dessen Herstellung gemäß Anspruch 8.

Ein Muldenkörper ist als Bestandteil eines Tankklappenmoduls bekannt aus der EP-A-0273525. Als wesentliches Element des Tankklappenmoduls deckt der Muldenkörper im wesentlichen die Funktionen Anlenkung der in der Regel deckelartig ausgebildeten Tankklappe Halterung für eine Verriegelungseinrichtung ab. Häufig ist man auch daran interessiert, daß eine Abdichtung des Muldenkörpers gegenüber einem Tankfüllstutzens vorhanden ist.

In dem zitierten Stand der Technik deutet der formstabil ausgebildete Muldenkörper darauf hin, daß für eine eventuelle Abdichtung gegenüber dem nicht dargestellten Tankfüllstutzen gesondert Dichtelemente, wie Dichtringe oder Dichtmanschetten, eingebracht werden müssen. Wird also eine Dichtfunktion gegenüber dem Tankfüllstutzen gewünscht, müssen gesonderte Bauteile hergestellt werden, die überdies auch einen zusätzlichen Montageaufwand erfordern. Ein weiteres Problem kann in der dort gezeigten Anbringung einer Verriegelungseinrichtung für die Tankklappe gesehen werden. Diese ist an einem weit auskragenden Befestigungsflansch angeschraubt. Die weite Auskragung erschwert beim Einsatz des Tankklappenmoduls in die den Tankfüllstutzen umgebende Öffnung der Fahrzeugkarosserie den Ein- und Ausbau. Das in der zitierten Schrift gezeigte Ausführungsbeispiel erlaubt sogar nur eine Befestigung von der Innenseite des Fahrzeugs her und ist daher nur für entsprechend ausgelegte Fahrzeugkonzepte verwendbar.

Die US-PS 5,118,155 zeigt einen Muldenkörper, der an seinem einen Rand in die Öffnung der Fahrzeugkarosserie eingeknöpft ist und mit einer Bodenöffnung einen Tankfüllstutzen aufnimmt. Der Muldenkörper ist in allen Bereichen relativ starkwandig und starr ausgebildet, da er die Aufgabe hat, den Tankfüllstutzen zu stützen. Die Frage der Dichtheit der Durchführung dieses Stutzens durch die Bodenöffnung des Muldenkörpers ist nicht angeschnitten; es muß davon ausgegangen werden, daß infolge der starkwandigen Ausführung des Muldenkörpers eine Dichtheit an dieser Stelle wiederum nur durch zusätzliche Dichtkörper erzielbar ist.

Schließlich sei die EP-A-0545813, die als nächstliegender Stand der Technik betrachtet wird, erwähnt. Sie offenbart einen Muldenkörper nach dem Oberbegriff des Anspruchs 1, der im wesentlichen innerhalb einer umlaufenden rinnenförmigen Erweiterung des Tankfüllstutzens verläuft und dort eine Schulter an dem Stutzen hintergreift, so daß dort der Muldenkörper gelagert ist. Er dient seinerseits zur Klapplagerung einer Tankklappe. Über eine dichte Durchführung des Tankfüllstutzens durch die ihm zugeordnete Bodenöffnung in dem Muldenkörper ist dieser Schrift nichts zu entnehmen. Eine Dichtheit an dieser Stelle dürfte auch überflüssig sein, da die ringförmige Erweiterung des Tankfüllstutzens für Dichtheit sorgt.

Der Erfindung liegt die Aufgabe zugrunde, einen gattungsgemäßen Muldenkörper zu schaffen, der die obenaufgeführten Nachteile des Standes der Technik vermeidet.

Die erfindungsgemäße Lösung dieser Aufgabe besteht in den kennzeichnenden Merkmalen des Hauptanspruchs, vorteilhafte Ausbildungen der Erfindung beschreiben die Unteransprüche.

Wie Anspruch 1 zum Ausdruck bringt, sieht die Erfindung eine Unterteilung des Muldenkörpers in einen formstabil ausgeführten Hauptabschnitt, an den der Deckel angelenkt ist, und einen Dichtfunktionen erfüllenden Bodendichtabschnitt vor.

Damit entfällt bei der Montage gegenüber dem eingangs diskutierten Stand der Technik ein Arbeitsgang für den Ein- oder Ausbau eines separaten Dichtelements. Gleichzeitig entfällt eine Dichtfuge, weil die Anformung des elastischen Bodendichtabschnitts an den Hauptabschnitt spaltfrei erfolgt. Besonders vorteilhaft ist die Ausdehnung des Bodendichtabschnitts bis in die Randbereiche des Muldenkörpers hinein, weil auf diese Weise die den Tankfüllstutzen beaufschlagende Ausnehmung in den Muldenkörper ein- und ausgekrempelt werden kann. Durch die Einkrempelung verringern sich die Hüllmaße des gesamten Tankklappenmoduls, so daß im Vorfeld der Fahrzeugmontage bei der Bauteilebereitstellung in Transportbehältnissen vorgegebener Größe eine erhöhte Anzahl von Tankklappenmodulen untergebracht werden kann.

Bei der Konstruktion gemäß den Patentansprüchen 9 und 10 weist der Muldenkörper als Schnittstelle zu einer Verriegelungseinrichtung einer Ausformung auf, die so ausgeführt ist, daß sie in ein vorzugsweise halbwannenartig ausgeführtes Adapterstück einsteckbar ist. Damit können in vorteilhafter Weise wesentliche Elemente der Verriegelungseinrichtung wie z.B. der Stellmotor für eine den Deckel verriegelnde Sperrklinke oder diese selbst unabhängig von dem Muldenkörper am Fahrzeugaufbau befestigt werden. Gleichzeitig wird die Möglichkeit eröffnet, eine Karosseriewand des Fahrzeugs, beispielsweise eine Radhauswand, zwischen dem Stellmotor und dem Tankklappenmodul verlaufen zu lassen. Somit können die in der Regel feuchtigkeitsempfindlichen Stellmotoren in Karosseriebereichen untergebracht werden, die keiner nennenswerten Feuchtigkeitsbelastung ausgesetzt sind.

Ein vorteilhaftes Ausführungsbeispiel, an dem die erfindungsgemäße Lösung verwirklicht ist, ist in der Zeichnung dargestellt. Es zeigt
- Figur 1:: einen erfindungsgemäßen Muldenkörper als Bestandteil eines Tankklappenmoduls und für diesen die Einbausituation in einem Fahrzeug,
- Figur 2:: einen Schnitt II - II gemäß Figur 1 ergänzt um die schematischer Darstellung einer Verriegelungseinrichtung,
- Figur 3:: eine Ansicht gemäß Einzelheit X in Figur 1,
- Figur 4:: in schematischer Darstellung einen Muldenkörper ohne zusätzliche Funktionsbauteile und
- Figur 5:: einen Schnitt V- V gemäß Figur 4.

In allen Figuren weisen gleiche Bauteile oder Bauteilabschnitte die gleiche Bezifferung auf.

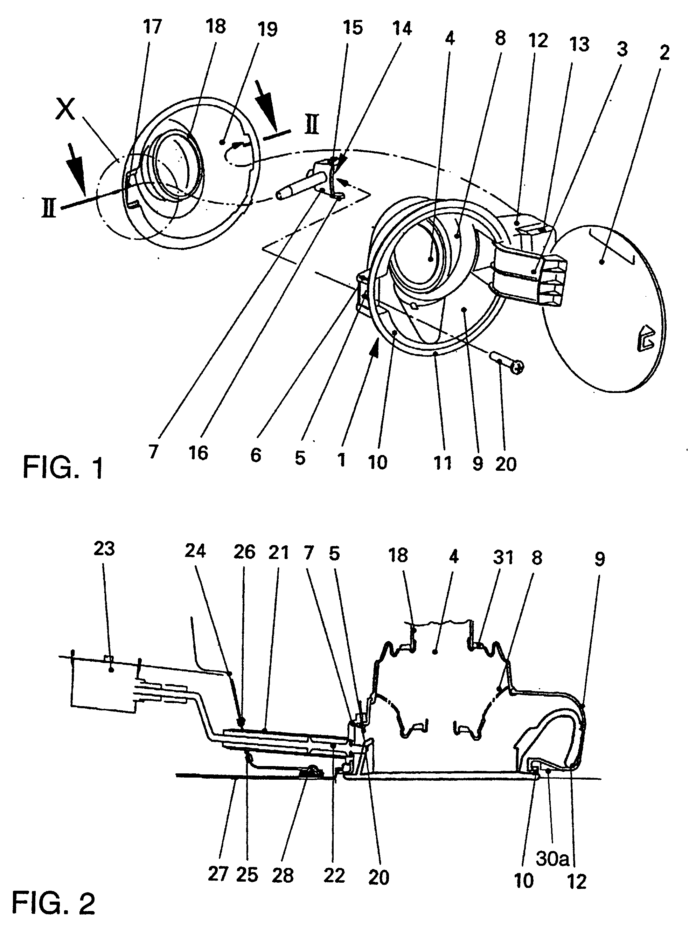

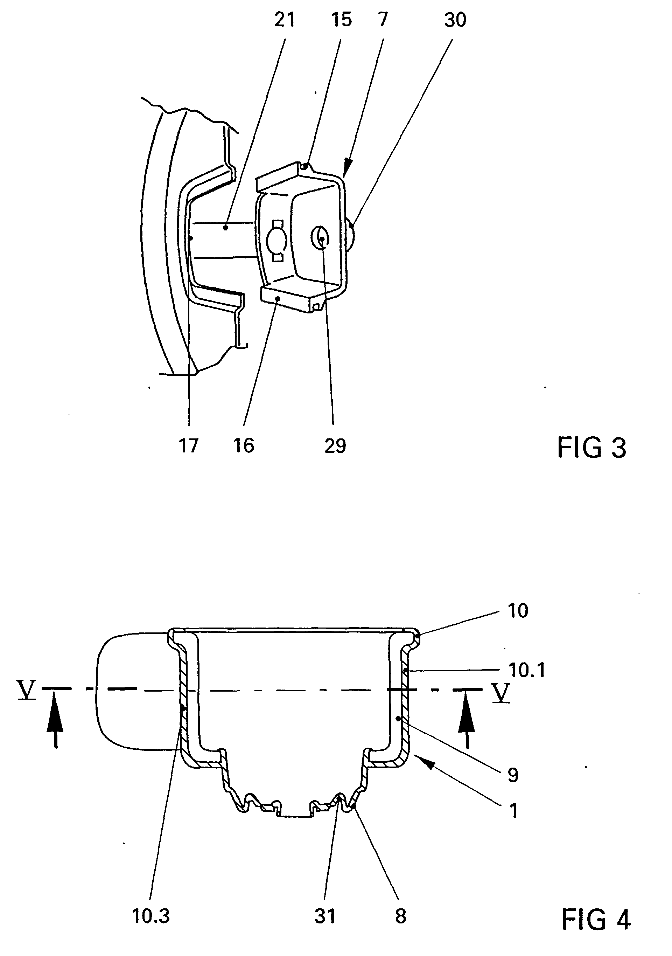

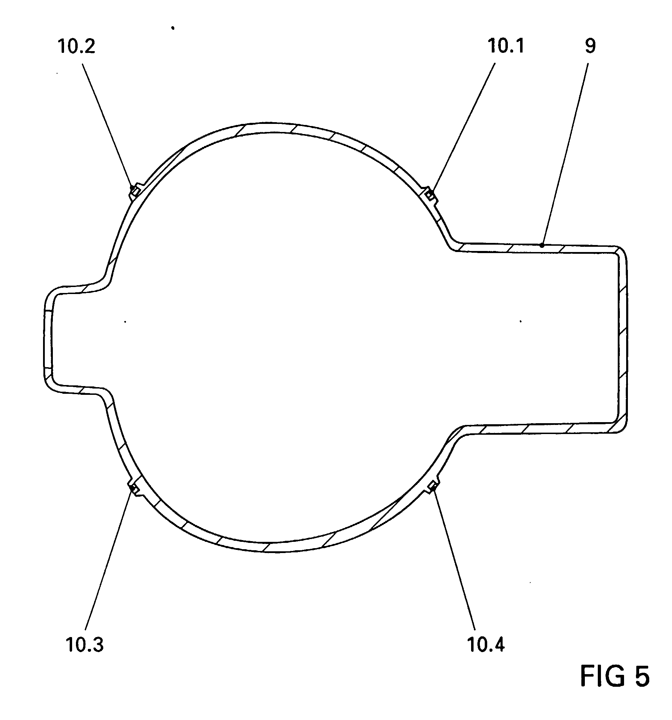

Man erkennt in Figur 1 ein nicht weiter beziffertes Tankklappenmodul, dessen wesentliche Elemente ein insgesamt mit 1 bezeichneter Muldenkörper, ein Deckel 2 mit einem Schwenkarm 3, eine erste Ausnehmung 4 und eine zweite Ausnehmung 5 sind. Letztere gehört zu einer hier nach außen abgestellten Ausformung 6, die integraler Bestandteil des Muldenkörpers 1 ist. Die Außenkontur dieser Ausformung 6 ist abgestimmt auf die Innenkontur eines hier halbwannenartig ausgebildeten Adapterstückes 7, das wiederum Bestandteil einer in dieser Ansicht nicht weiter dargestellten Verriegelungseinrichtung ist. Der insgesamt einteilig ausgebildete Muldenkörper 1 wie gebildet durch einen elastisch verformbaren Bodendichtabschnitt 8 und einen Hauptabschnitt 9, der an seiner dem Deckel 2 zugewandten Seite einen umlaufenden Randflansch 10 aufweist. An diesem ist eine umlaufende und zur Beaufschlagung durch den Deckel 2 ausgebildete Dichtung 11 angespritzt, deren Werkstoff ebenfalls elastisch nachgiebig ist. Der Zusammenhang zwischen dieser Dichtung 11 und dem Bodendichtabschnitt 8 wird in der Beschreibung zu den Figuren 4 und 5 noch näher erläutert werden. Die Befestigung des Schwenkarms 3 an dem Muldenkörper 1 erfolgt im Bereich einer Auskragung 12 über eine darin befindliche Lagerachse 13.

Vor der Montage des Tankklappenmoduls wie zunächst das eine halbwannenartige Innenmulde 14 aufweisende Adapterstück 7 über angeformte Führungsstücke 15 und 16 in einen nach Art einer Ausbuchtung gebildeten Karosserieausschnitt 17 eingepaßt. Letzterer ist Bestandteil einer einen Tankfüllstützen 18 umrandenden Öffnung 19. Mit der Auskragung 12 voran wird das Tankklappenmodul in die Öffnung 19 eingefädelt und anschließend die Ausformung 6 in der Innenmulde 14 des Adapterstückes 7 zentriert. Der zunächst nur auf dem Tankeinfüllstutzen 18 aufliegende Bodendichtabschnitt 8 wie dann über den Tankeinfüllstutzen 18 gestülpt und verhindert auf diese Weise wirkungsvoll, daß beim Tanken Kraftstoff ins Fahrzeuginnere eindringen oder aus dem Fahrzeug ins Freie auslaufen kann.

Figur 2 verdeutlicht die Lage des Tankklappenmoduls nach dem Einbau in das Kraftfahrzeug. Das Adapterstück 7 ist an dem Muldenkörper 1 mittels einer Schraube 20 befestigt, die die erste Ausnehmung 5 durchdringt. Die Rotationsachse der Schraube 5 ist so gewählt, daß bei offenstehendem Deckel 2 die Schraube 5 mit einem konventionellen Schraubenzieher problemlos befestigt und gelöst werden kann. Die Orientierung zur Oberfläche ist so gewählt, daß die Rotationsachse im wesentlichen senkrecht dazu steht oder zu dieser Senkrechten maximal um 10 - 20° geneigt ist. Hinzuweisen ist an dieser Stelle auch auf Verdickungen an dem Hauptabschnitt 9 in den Übergangsbereichen zum Bodendichtabschnitt 8 einerseits und zum Stirndichtabschnitt 10 andererseits. Diese Verdickungen des formstabilen Werkstoffs werden mit elastischem Werkstoff umspritzt, um so eine dauerhafte Anbindung sicherstellen zu können.

Wesentlicher Bestandteil des Adapterstücks 7 ist auch eine Führungshülse 21, in der eine Entriegelungsstange 22 mittels eines Stellmotors 23 hin- und herbewegbar ist. Die Führungshülse 21 durchdringt eine Radhauswand 24 im Bereich einer Öffnung 25, der eine umlaufende Dichtung 26 zugeordnet ist. Die Radhauswand 24 ist gegenüber einer Seitenwand 27 des hier nicht weiter dargestellten Fahrzeugs mittels einer Dichtmasse 28 abgedichtet.

Figur 3 verdeutlicht den Einsatz des Adapterstückes 7 in die Ausbuchtung 17 der Karosserieöffnung 19. In dieser Ansicht wird die Orientierung einer koaxial zur Ausnehmung 5 des Muldenkörpers 1 angeordneten Bohrung 29 besonders deutlich. Hinter dieser Bohrung 29 befindet sich ein angeformter Gewindeflansch 30, in den die Schraube 20 zur Fixierung des Adapterstückes 7 gegen den Muldenkörper 1 eingedreht wird. Die Schraube 20 dient auch zusammen mit einer Rastnase 30a auf der Oberseite derAuskragung 12 der eindeutigen Befestigung des gesamten Tankklappenmoduls an der Fahrzeugkarosserie.

Aus den Figuren 1 bis 3 ist erkennbar, daß die Elemente der Verriegelungseinrichtung unabhängig vom Tankklappenmodul im Fahrzeug eingebaut und justiert werden können. Ferner wird aus der Figur 2 deutlich, daß durch den zunächst eingekrempelten Bodendichtabschnitt 8 (siehe Darstellung in Strichlinien) die Hüllmaße des Muldenkörpers 1 deutlich verringert sind. Die Verbindung mit dem Tankfüllstutzen 18 wird gesichert durch eine umlaufende Verdickung 31, die wie ein Spannring wirkt und damit auch bei stärkster Vibrationsbelastung einen festen Sitz des Bodendichtabschnittes 8 am Tankfüllstutzen 18 gewährleistet.

Figur 4 zeigt einen Schnitt durch den Muldenkörper 1 in einer Ebene, die gegenüber der Schnittebene in Figur 2 um 45° verdreht ist. Diese Ansicht wurde gewählt, um den Zusammenhang zwischen dem Bodendichtabschnitt 8 und dem Stirndichtabschnitt 10 zu verdeutlichen. In besonders vorteilhafter Weise sind diese den Hauptabschnitt 9 überdeckend mittels Angußbrücken 10.1 bis 10.4 miteinander verbunden. Beide Abschnitte sind also materialeinheitlich ausgebildet, und zwar vorzugsweise aus einem Kunststoff wie Ethylen-Propylen-Kautschuk (EPDM oder als Polyblend ein PP/EPDM). Zu beachten ist auch, daß der Stirndichtabschnitt 10 sowohl für den Deckel 2 als auch für die Anlage an der Seitenwand 27 eine elastische Auflage darstellt.

Gemäß einem besonders vorteilhaften Herstellungsverfahren wie in einem ersten Arbeitsgang zunächst der Hauptabschnitt 9 vorzugsweise aus einem Kunststoff fertiggespritzt und dann soweit abgekühlt, daß er formstabil ist. Als Material wird bevorzugt Polypropylen mit Mineral- oder Glasfaserverstärkung gewählt, also beispielsweise ein PP/GF-30. Anschließend werden in einem weiteren Arbeitsgang der Stindichtabschnitt 10 und der Bodendichtabschnitt 8 gemeinsam an dem Hauptabschnitt 9 angespritzt. Die als Spannelement wirksame Verdickung 31 ist integraler Bestandteil des Bodendichtabschnittes 8, so daß mit Bezug auf den Muldenkörper 9 zur Abdichtung gegenüber dem Tankfüllstutzen 18 nicht nur eine gesonderte Dichtmanschette, sondern auch ein gesondertes Spannelement eingespart werden kann.

Figur 5 zeigt die in Figur 4 dargestellten Verhältnisse in einer Draufsicht. Die Angußbrücken 10.1 bis 10.4 sind im wesentlichen gleichmäßig um den Umfang des Hauptabschnittes 9 verteilt, um eine gleichmäßige Füllung beim Spritzvorgang einstellen zu können.

Der erfindungsgemäße Muldenkörper ist im ganzen so konzipiert, daß er prinzipiell in ganz unterschiedlichen Karosseriekonzepten eingesetzt werden kann. Der umlaufende Stirndichtabschnitt 10 sorgt außerdem dafür, daß bei geschlossenem Deckel 2 von außen weder Flüssigkeiten noch Staub in den darunter befindlichen Hohlraum gelangen. Der Werkstoff für den Deckel 2 ist frei wählbar, es können also Metalldeckel oder Kunststoffdeckel zur Anwendung kommen, und zwar lackiert oder unlackiert. Letzteres soll heißen, daß beispielsweise der Deckel 2 auch aus einem farbigen Kunststoff hergestellt sein kann, der hinsichtlich seiner Tönung auf die Farbe des Fahrzeugs abgestimmt ist.

## Patentansprüche

1. Muldenkörper für ein in eine Fahrzeugkarosserie einsetzbares Tankklappenmodul, der sich dann zwischen einer Karosserieöffnung (19) und einem Tankfüllstützen (18), diesen mit einer ersten Ausnehmung (4) aufnehmend, erstreckt, und der einen formstabil ausgeführten Muldenkörper-Hauptabschnitt (9) aufweist, an den ein der Karosserieöffnung (19) zugeordneter Deckel (2) angelenkt und der zur Befestigung des Muldenkörpers (1) an der Fahrzeugkarosserie im Bereich der Karosserieöffnung (19) eingerichtet ist, dadurch gekennzeichnet, daß an den formstabilen Muldenkörper-Hauptabschnitt (9) ein Muldenkörper-Bodenabschnitt aus einem thermoplastischen Elastomer als die erste Ausnehmung (4) enthaltender elastischer Bodendichtabschnitt (8) angeformt ist zur dichtelementfreien dichten Aufnahme des Tankfüllstützens (18).

2. Muldenkörper nach Anspruch 1, gekennzeichnet durch einen dem Deckel (2) zugeordneten Stirndichtabschnitt (10), der an einem dem Deckel (2) zugewandten Wandungsabschnitt des Hauptabschnitts (9) angeformt ist.

3. Muldenkörper nach Anspruch 1 und 2, dadurch gekennzeichnet, daß der Hauptabschnitt (9), der Bodendichtabschnitt (8) und der Stirndichtabschnitt (10) aus einem spritzfähigen Kunststoff hergestellt sind.

4. Muldenkörper nach Anspruch 3, dadurch gekennzeichnet, daß der Bodendichtabschnitt (8) und der Stirndichtabschnitt (10) über den Hauptabschnitt (9) übergreifende Angußbrücken (10.1 bis 10.4) miteinander verbunden sind.

5. Muldenkörper nach Anspruch 3, dadurch gekennzeichnet, daß der Hauptabschnitt (9) aus Polypropylen, vorzugsweise mit Glasfaser- und Mineralfaserverstärkung, hergestellt ist.

6. Muldenkörper nach Anspruch 3, dadurch gekennzeichnet, daß der Bodendichtabschnitt (8) aus EPDM oder PP/EPDM hergestellt ist.

7. Muldenkörper nach Anspruch 3 oder 4, dadurch gekennzeichnet, daß der Bodendichtabschnitt (8) und der Stirndichtabschnitt (10) materialeinheitlich ausgebildet sind.

8. Verfahren zur Herstellung eines Muldenkörpers gemäß Anspruch 7, dadurch gekennzeichnet, daß in einem ersten Arbeitsgang der Hauptabschnitt (9) gespritzt wird, und in einem zweiten Arbeitsgang nach einer vorgegebenen Abkühlphase der dann formstabile Hauptabschnitt (9) in ein Spritzwerkzeug eingelegt wird, in dem der Stirndichtabschnitt (10) und der Bodendichtabschnitt (8) gemeinsam an dem Hauptabschnitt (9) angespritzt werden.

9. Muldenkörper nach einem der Ansprüche 1 bis 7, dadurch gekennzeichnet, daß er zum Durchtritt einer Entriegelungsstange (22) einer Verriegelungseinrichtung eine seitliche Ausformung (6) aufweist, deren Kontur einem die Entriegelungsstange (22) führenden Adapterstück (7) angepaßt ist, das über angeformte Führungsstücke (15, 16) in einen Karosserieausschnitt (17) einpaßbar ist, und daß der Ausformung (6) wenigstens eine zweite Ausnehmung (5) zugeordnet ist zum Durchtritt eines das Adapterstück (7) an der Karosserie fixierenden Befestigungsmittels (20).

10. Muldenkörper nach Anspruch 9, dadurch gekennzeichnet, daß die Achse der zweiten Ausnehmung (5) im wesentlichen senkrecht zur Oberfläche des geschlossenen Deckels (2) ausgerichtet ist.

## Claims

1. Trough body for a fuel tank cover module which can be inserted into a vehicle body, which then extends between a body orifice (19) and a tank filler neck (18) in such a way as to receive this neck with a first aperture (4), and which comprises a dimensionally-stable trough-body main portion (9), on which a cover (2) allocated to the body orifice (19) is articulated and which is arranged to attach the trough body (1) to the vehicle body in the region of the body orifice (19), characterised in that on the dimensionally-stable trough-body main portion (9) a trough-body base portion of a thermoplastic elastomer is integrally formed as an elastic base sealing portion (8) containing the first aperture (4), in order to receive the tank filler neck (18) in a sealed manner without the use of sealing elements.

2. Trough body according to claim 1, characterised by a front face sealing portion (10) allocated to the cover (2) and integrally formed on a wall portion, facing the cover (2), of the main portion (9).

3. Trough body according to claim 1 and 2, characterised in that the main portion (9), the base sealing portion (8) and the front face sealing portion (10) are produced from a synthetic material which can be injected.

4. Trough body according to claim 3, characterised in that the base sealing portion (8) and the front face sealing portion (10) are connected to each other by sprue bridges (10.1 to 10.4) reaching over the main portion (9).

5. Trough body according to claim 3, characterised in that the main portion (9) is produced from polypropylene, preferably with glass fibre and mineral fibre reinforcement.

6. Trough body according to claim 3, characterised in that the base sealing portion (8) is produced from EPDM or PP/EPDM.

7. Trough body according to claim 3 or 4, characterised in that the base sealing portion (8) and the front face sealing portion (10) are formed from the same piece of material.

8. Method for producing a trough body according to claim 7, characterised in that in a first working process the main portion (9) is injected, and in a second working process, after a predetermined cooling phase, the main portion (9), which is then dimensionally stable, is placed in an injection moulding die, in which the front face sealing portion (10) and the base sealing portion (8) are injected together on the main portion (9).

9. Trough body according to one of claims 1 to 7, characterised in that, for the passage of a release rod (22) of a locking device, it comprises a lateral formation (6), of which the contour is adapted to an adapter piece (7) guiding the release rod (22), which adapter piece can be fitted into a body section (17) via integrally formed guide pieces (15, 16), and that the formation (6) is allocated at least one second aperture (5) for passage of an attachment means (20) fixing the adapter piece (7) to the body.

10. Trough body according to claim 9, characterised in that the axis of the second aperture (5) is orientated substantially perpendicular to the surface of the closed cover (2).

## Revendications

1. Corps d'auget pour un module de trappe de réservoir à installer dans une carrosserie d'un véhicule, s'étendant alors entre une ouverture (19) ménagée dans la carrosserie et une tubulure (18) de remplissage du réservoir, recevant cette dernière dans un premier évidement (4), ce corps comprenant une section principale (9) d'auget, réalisée de façon rigide, sur laquelle est articulée une trappe (2) associée à l'ouverture (19) ménagée dans la carrosserie, et qui est aménagée pour la fixation du corps d'auget (1) sur la carrosserie du véhicule au niveau de l'ouverture (19) de la carrosserie, caractérisé en ce qu'une section de fond du corps d'auget, réalisée en un élastomère thermoplastique, est formée sur la section principale rigide (9) du corps d'auget, qui sert de section d'étanchéité de fond élastique (8) contenant le premier évidement (4) et est destinée à recevoir, de façon étanche sans élément d'étanchéité, la tubulure (18) de remplissage du réservoir.

2. Corps d'auget selon la revendication 1, caractérisé par une section d'étanchéité frontale (10) associée à la trappe (2), qui est conformée sur une partie de la paroi de la section principale (9), qui est tournée face à la trappe (2).

3. Corps d'auget selon la revendication 1 ou 2, caractérisé en ce que la section principale (9), la section d'étanchéité de fond (8) et la section d'étanchéité frontale (10) sont réalisées en une matière plastique pouvant être moulée par injection.

4. Corps d'auget selon la revendication 3, caractérisé en ce que la section d'étanchéité de fond (8) et la section d'étanchéité frontale (10) sont reliées l'une à l'autre par l'intermédiaire de ponts de moulage (10.1 à 10.4) contournant la section principale (9).

5. Corps d'auget selon la revendication 3, caractérisé en ce que la section principale (9) est faite en polypropylène, de préférence armé de fibres de verre et de fibres minérales.

6. Corps d'auget selon la revendication 3, caractérisé en ce que la section d'étanchéité de fond (8) est faite en EPDM ou en PP/EPDM.

7. Corps d'auget selon la revendication 3 ou 4, caractérisé en ce que la section d'étanchéité de fond (8) et la section d'étanchéité frontale (10) sont faites dans un même matériau.

8. Procédé de fabrication d'un corps d'auget selon la revendication 7, caractérisé en ce que, dans une première étape, la section principale (9) est moulée par injection, et que, dans une deuxième étape, après une phase prédéfinie de refroidissement, la section principale (9) alors rigide est mise en place dans un outil de moulage par injection, dans lequel la section d'étanchéité frontale (10) et la section d'étanchéité de fond (8) sont moulées conjointement sur la section principale (9).

9. Corps d'auget selon l'une des revendications 1 à 7, caractérisé en ce que, pour permettre le passage d'une tige de déverrouillage (22) d'un dispositif de verrouillage, il comporte une formation latérale (6) dont le contour est adapté à un adaptateur (7) guidant la tige de déverrouillage (22), cet adaptateur pouvant être inséré dans une découpe (17) aménagée dans la carrosserie, via des éléments de guidage (15, 16) formés à son contact, et en ce qu'au moins un deuxième évidement (5) est associé à la formation (6), pour le passage d'un moyen de fixation (20) permettant de fixer l'adaptateur (7) sur la carrosserie.

10. Corps d'auget selon la revendication 9, caractérisé en ce que l'axe du deuxième évidement (5) est orienté essentiellement perpendiculairement à la surface de la trappe (2), lorsque celle-ci est fermée.
